# EUROPEAN PATENT APPLICATION

(11) **EP 0 550 909 A1**
(43) Date of publication of application: **14.07.1993**
(21) Application number: 92122085.1
(22) Date of filing: 29.12.1992
(51) Int. Cl.: G06F 1/16, G06K 11/18

(54) **Adjustable stand for pointing device**

(30) Priority: 09.01.1992 US 818554
(71) Applicant: MICROSOFT CORPORATION, Redmond, Washington 98052-6399 (US)
(72) Inventor: Ashmun, Stuart, Seattle, Washington 98103 (US); Nelson, Michael D., Seattle, Washington 98116 (US); Curneen, Michael F., Bellevue, Washington 98007 (US); Paull, Mike M., Seattle, Washington 98103 (US)
(74) Representative: Grünecker, Kinkeldey, Stockmair & Schwanhäusser Anwaltssozietät

(57) **Abstract**

An adjustable stand to which a pointing device is removably attachable is disclosed. The stand includes an arm pivotally coupled to a base. An attachment assembly is pivotally coupled to the other end of the arm. The attachment assembly includes an attachment plate pivotally coupled to a support bar. The pointing device is removably attachable to the attachment assembly. In the preferred embodiment, the arm is pivotally coupled to the base with an elevation pivot, the attachment assembly is pivotally coupled to the arm with a pitch pivot, and the attachment plate is pivotally coupled to the support bar about a roll pivot, allowing a user to select the elevation, pitch, and roll of the pointing device.

## Description

### Technical Field

This invention is related to an adjustable stand for a pointing device which allows a user to position the pointing device in a selected elevation and orientation.

### Background of the Invention

Pointing devices for entering commands into a computer are well known in the art. Some pointing devices include a rotatable ball and one or more depressible buttons. Electronic encoders sense rotation of the ball, and generate a signal indicative of the ball's rotation to control movement of a cursor on the screen of the computer. Depressing one of the buttons permits the user to enter various commands into the computer location of the cursor. For example, depressing the button may highlight text in a word processing program, pull down a menu, open and close files, and the like.

In a trackball-type pointing device, the housing is supported on a work surface, for example, a tabletop, and the rotatable ball faces upward. The rotatable ball is exposed above the housing for rotation by the hand of a user. Such a pointing device is described in U.S. Patent Application No. 425,527, published on May 2, 1991 under International Publication No. WO 91/06048.

The requirement that such pointing devices must be supported on a work surface dictates how a user must position her hand in order to operate the pointing device. This is a shortcoming of existing products. Every user is different, in physical size, physical proportions, and personal preferences. As a result, the optimum operating position will be different, depending on who is using the pointing device. Furthermore, the optimum operating position may change for a given user, depending on the task at hand. With current pointing devices, if each user wishes to operate the pointing device in a different orientation, the user must pick up and hold the pointing device, which is awkward and cumbersome. Alternatively, the housing design must be completely redesigned for each user.

Some recently introduced pointing devices do not necessarily require support from a work surface. For example, the pointing device may be mounted on an assembly that supports both the keyboard and the pointing device, as described in U.S. Patent No. 4,913,387, to Tice, and U.S. Patent No. 4,799,049, to Avila. However, these alternatives to placing the pointing device on a work surface also dictate a fixed position for the pointing device, which may not be the optimum operating position for the individual user.

There is also a product currently on the market, the Microsoft Ballpoint Mouse, that allows the user to removably attach the pointing device to the keyboard. While this device is an improvement over the prior art, there still exists a need for a stand that is independent of the keyboard and computer and that gives the user the ability to select and change the elevation and orientation of the pointing device.

### Summary of the Invention

It is therefore an object of this invention to provide an adjustable stand for a pointing device which allows the user to select an optimum operating position for the pointing device.

It is another object of this invention to provide an adjustable stand for a pointing device such that the elevation and orientation of the pointing device is variable and selectable by the user.

These and other objects of the invention, as will be apparent herein, are accomplished by providing an adjustable stand to which a pointing device is removably attachable. Depending upon the task at hand and the personal preference of the user, the user may select an optimum operating position for the pointing device, by manipulating the height, pitch, and roll of the pointing device. The elevation, pitch, and roll may all be altered independently, or may be altered by the user in combination, providing a multitude of operating positions. Given the numerous options available, the user is able to position the pointing device in any desired orientation, thereby liberating the user from the limitations inherent in having the pointing device located in a fixed orientation.

### Brief Description of the Drawings

Figure 1 is a front isometric view of an adjustable stand.

Figure 2 is an exploded isometric view of the adjustable stand of Figure 1.

Figure 3 is a side elevation view of the adjustable stand of Figure 1.

Figure 4 is a rear isometric view of the adjustable stand of Figure 1 with a pointing device attached.

Figures 5-10 are side, elevational views of the adjustable stand showing the stand's three degrees of freedom.

Figure 11 is an isometric view of a first alternative embodiment of the adjustable stand.

Figure 12 is an isometric view of a second alternative embodiment of the adjustable stand.

Figure 13 is an isometric view of a third alternative embodiment of the adjustable stand.

Figure 14 is an isometric view of a fourth alternative embodiment of the adjustable stand.

### Detailed Description of the Invention

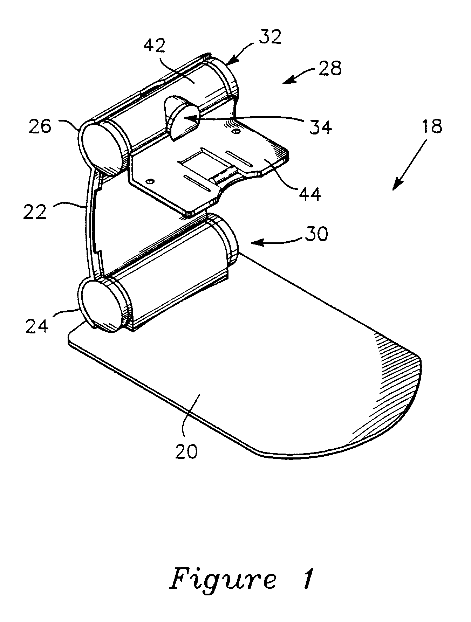

As illustrated in Figures 1-3, the stand 18 includes a base member 20, an arm 22, and a support assembly 28. The base member 20 is pivotally coupled by an elevation pivot 30 to a first end 24 of the arm 22. A second end 26 of the arm 22 is pivotally coupled by a pitch pivot 32 to the support assembly 28. The support assembly 28 includes a support bar 42 and an attachment plate 44, the two being pivotally coupled by a roll pivot 34.

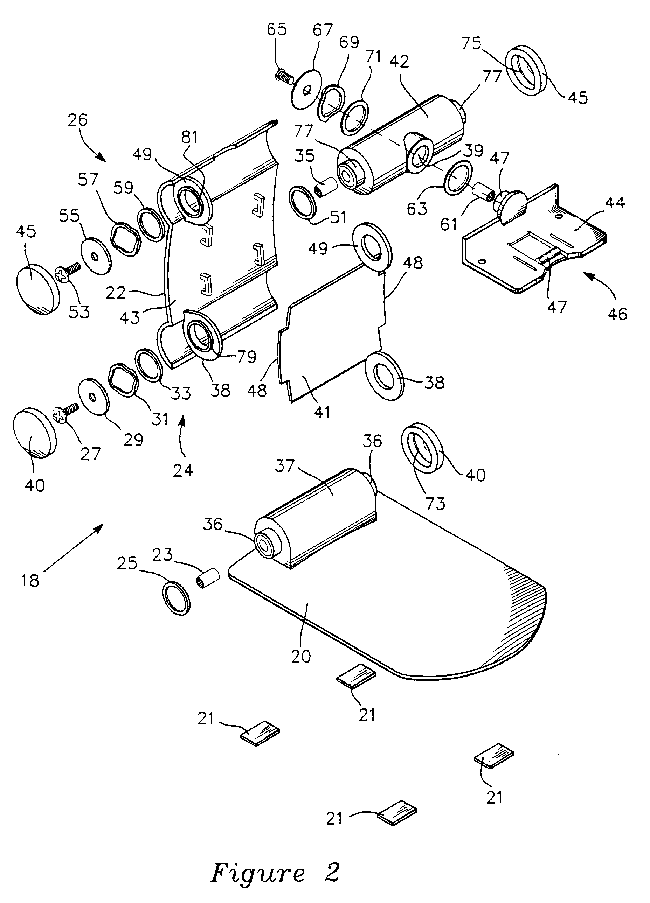

As illustrated in Figures 2-3, the base member 20 has a flat bottom surface to which four elastomeric feet 21 are attached, two on one side as illustrated in Figure 2 and two, correspondingly, on the other side. The base member 20 also includes an integral, elevated bar 37 extending from a top surface. A shaft 36 extends from each end of bar 37, one from each end, respectively. Within each shaft 36 is a threaded insert 23.

The elevation pivot 30 is composed of each shaft 36 extending through a ring 38 on the arm 22. Each ring 38 includes a circular ridge 79. A flat washer 25 is around shaft 36 between the bar 37 and each ring 38. A screw 27 extends through a flat washer 29, a wave washer 31, and another flat washer 33, and screws into the threaded insert 23 of shaft 36, to connect the arm 22 and the bar 37, creating the elevation pivot 30. Flat washer 29 is slightly larger in diameter than wave washer 31 and flat washer 33 to retain them against the front surface of circular ridge 79 that provides a support surface for the washers. Cap 40, made of an elastomeric material, is placed over the screw and washer assembly, and extends over the circular ridge 79 to abut ring 38. Each cap 40 has a groove 73 in its inside surface to engage washer 29. A screw, flat washer, wave washer, and flat washer assembly extends into each end of bar 37, even though only one end is shown in detail for illustration purposes.

The wave washer acts as a disk spring, to provide a resilient, yet stiff engagement between the arm 22 and the base 20 at the elevation pivot 30. The screw 27 is threaded until it bottoms out, namely, until flat washer 29 is compressed flat against shaft 36, causing the elevation pivot 30 to have a preselected stiffness that is sufficiently loose for a user to pivot the arm 22 and yet sufficiently still to hold the arm 22 in a user selected position while supporting the weight of a pointing device. Each screw 27 is metal with a nylon adhesive patch on the threads, a fastener known to those of ordinary skill in the art. When the screw 27 is threaded, the nylon adhesive cures in a temporary set such that it bonds screw 27 to threaded insert 23 as if they were glued. The bond may be broken by loosening screw 27, allowing screw 27 to be threaded to a different position, after which the nylon adhesive will reset.

In an alternative embodiment, the user may adjust the stiffness of the pivot by tightening or loosening screw 27. If screw 27 is threaded to tightly press wave washer 31 against circular ridge 79, the pivot will be quite stiff, but if the screw 27 is not tightly threaded, the washer 29 will not compress wave washer 31 as tightly and the arm 22 will pivot more easily.

At the second end 26 of arm 22 a shaft 77 extends from each end of support bar 42 to form the pitch pivot 32. The support bar 42 is coupled to the second end 26 of arm 22 by a similar screw, flat washer, wave washer, and flat washer assembly as that used to couple the arm 22 to the base 20. Namely, within each shaft 77 is a threaded insert 35. Each shaft 77 fits through a respective flat washer 51 and ring 49. Each ring 49 includes a circular ridge 81. On each end of support bar 42, a screw 53 extends through a flat washer 55, a wave washer 57 and another flat washer 59, and screws into the threaded insert 35 of shaft 77, forming pitch pivot 32. Flat washer 55 is slightly larger than wave washer 57 and flat washer 59, to retain them against the front surface of circular ridge 81 that provides a support surface for the washers. Cap 45, made of an elastomeric material, is placed over the screw and washer assembly, and extends over circular ridge 81 to abut ring 49. Each cap 45 has a groove 75 in its inside surface to engage washer 55. A screw, flat washer, wave washer, and flat washer assembly extends into each end of support bar 42, even though only one end is shown in detail for illustration purposes. The axis of rotation of pitch pivot 32 is parallel to the axis of rotation of elevation pivot 30. When the stand 18 is supported on a flat work surface, both pivots rotate about an axis extending in a horizontal plane.

As shown in Figure 2, the arm 22 is constructed of a front member 41 and a rear member 43. The front member has one set of rings 38 and 49 and the rear member a second set of rings 38 and 49. Any suitable method of fixing the front member 41 and back member 43 together is acceptable, including adhesives, snaps, fasteners, screws, or the like. As will be appreciated by those of ordinary skill, the arm 22 could alternatively be a single piece arm with pivots 30 and 32 being formed by snapping a retaining ring over respective pivots or shafts or other suitable technique.

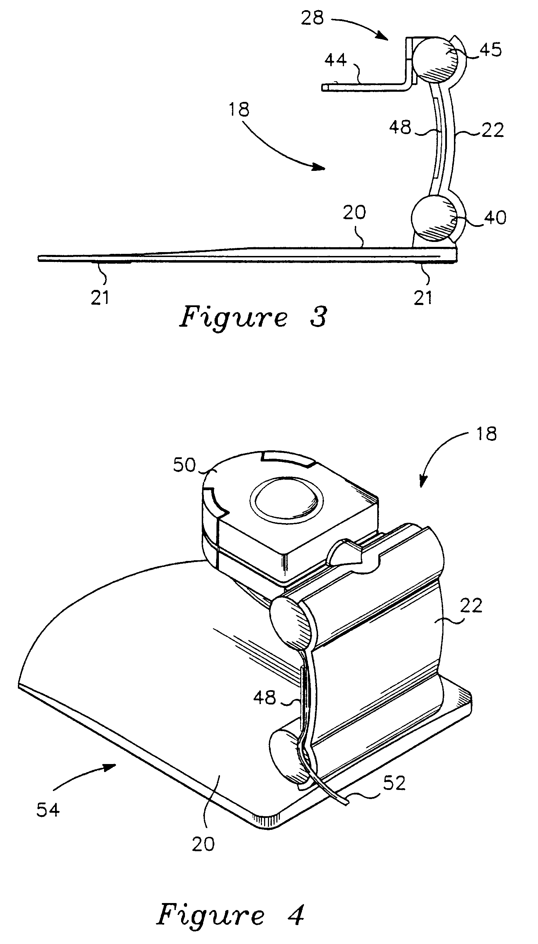

As best shown in Figures 2 and 4, the arm 22 includes a recess 48 in each side for receiving the cord 52 of a pointing device 50. As will be appreciated by those of ordinary skill, the arm could alternatively include only one recess 48, on one side or the other.

The support bar 42 is generally cylindrical and includes a circular aperture 39 extending from the side in a central region. The attachment plate 44 is coupled to the support bar 42 by a similar screw, flat washer, wave washer, and flat washer assembly as that used to couple the arm 22 to the base 20 and to couple the support bar 42 to the second end 26 of arm 22. A shaft 47, within which is a threaded insert 61, extends from attachment plate 44, through a flat washer 63, and into aperture 39. A screw 65 passes through a flat washer 67, a wave washer 69, another flat washer 71 and support bar 42, and screws into the threaded insert 61 of shaft 47, creating the roll pivot 34. The roll pivot 34 is generally perpendicular to the pitch pivot 32 and elevation pivot 30 and rotates about an axis extending in a generally horizontal plane.

In an alternative embodiment a user may change the stiffness of the pitch pivot 32 and roll pivot 34 by tightening or loosening screw 53 or screw 65, respectively, in the same manner as that described for adjustment of the stiffness of the elevation pivot 30.

As shown in Figure 2, the attachment plate 44 includes a mount 46 adapted to receive a pointing device. The mount 46 includes a resilient clip 47 that allows the pointing device 50 to be easily attached to and released from the attachment plate 44.

As illustrated in Figure 4, a pointing device 50 is mounted on the attachment plate 44 of the stand 18, forming a pointing device assembly 54. The recess 48 retains the cord 52 of the pointing device 50. The attachment plate 44 is configured based on the pointing device that will be mounted thereon. For example, a Ballpoint Mouse by Microsoft is shown thereon and the attachment plate 44 is configured to removably attach to this brand of trackball. Alternatively, the attachment plate is configured to receive other trackballs, such as the Logitech Trackman portable trackball, the Thumbelina trackball, or the like.

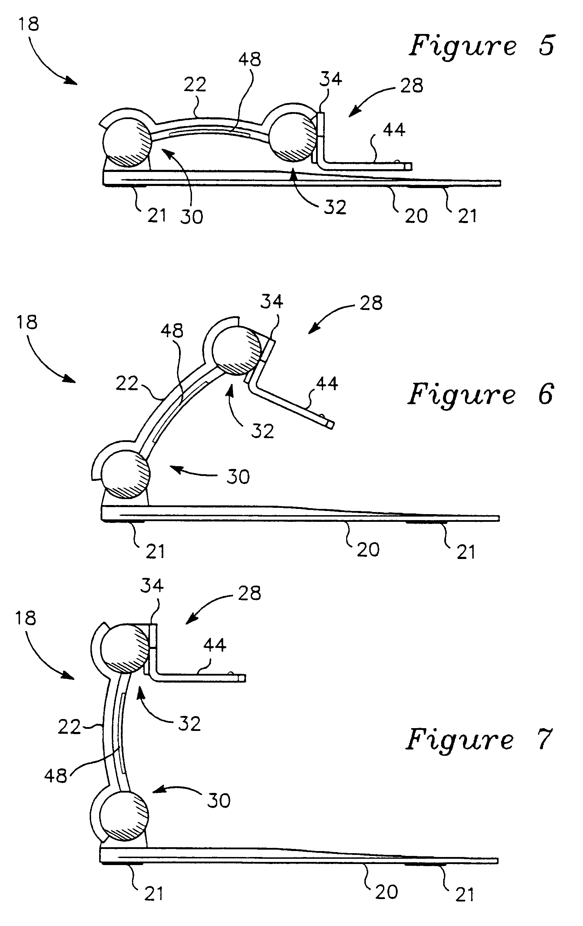

As illustrated in Figures 5-7, the elevation of the attachment plate 44 can be varied by rotating the arm 22 about elevational pivot 30. The arm 22 rotates about the elevation pivot 30 such that the arm 22 may be placed in a position substantially parallel to the base member 20, as seen in Figure 5, in a position substantially perpendicular to the base member 20, as illustrated in Figure 7, or at any angle of elevation in-between those illustrated in Figures 5 and 7, an example of which is illustrated in Figure 6. The user can thus adjust the stand 18 to place the pointing device 50 at a user selected height.

The elevation pivot 30 is designed to be sufficiently stiff that it will support the arm 22 and a pointing device placed thereon in the position set by the user and sufficiently loose that a user can rotate it with their hands. When the stand is manufactured, the screw 27 is tightened until it bottoms out as previously described, to provide this desired stiffness and yet remain sufficiently loose that a user can rotate the arm as desired. The cap 40 is placed thereon and a user does not have access to the screw 27. The pivot 30 will retain its preset stiffness for the life of the stand 18. Pivots 32 and 34 are similarly constructed and maintain a preset stiffness.

As described earlier, in an alternative embodiment, the user may adjust the stiffness of the elevation pivot 30 and pitch pivot 32 by manually tightening or loosening the screws 27 and 53 after removing the respective caps 40 and 45. The stiffness of the roll pivot 34 may be altered by tightening or loosening the screw 65 which is user accessible from the bottom of support bar 42 with the bar rotated fully upward. The user can thus adjust the stiffness of each pivot if desired or if it becomes necessary over the life of the stand 18.

As illustrated in Figures 5-9, the user selects the pitch of the pointing device 50 by setting the pitch angle of the attachment plate 44. The support assembly 28 rotates about the pitch pivot 32 such that the angle of pitch relative to the arm 22 may be selected by the user. The pitch pivot 32 rotates independent of the elevation pivot 30. As the arm 22 rotates about elevation pivot 30, the pitch pivot 32 is rotated in the opposite direction to maintain the same pitch angle, according to a user's preference.

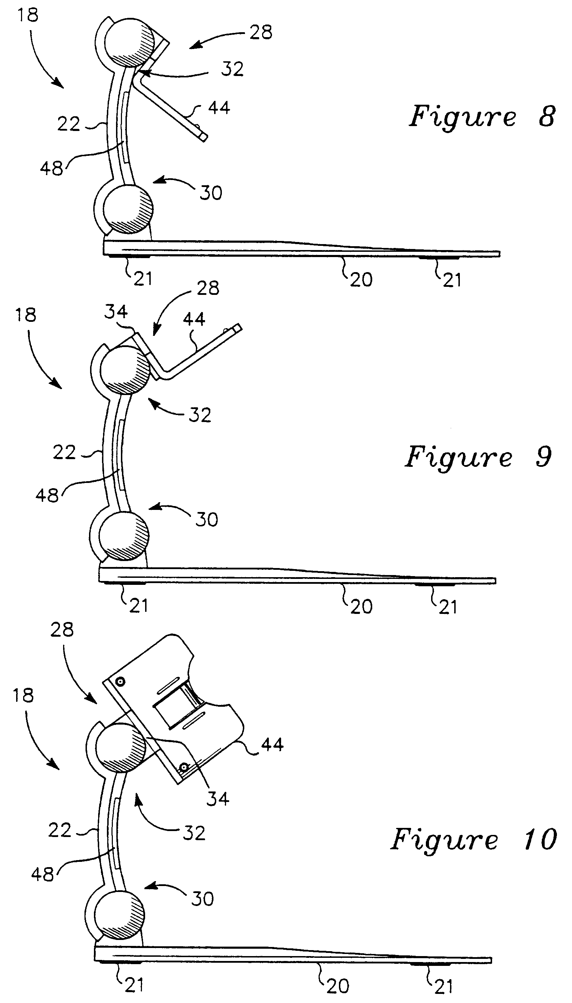

As illustrated in Figures 9 and 10, the user may also select the roll angle for the pointing device 50 by rotating the attachment plate 44 about the roll pivot 34.

The user may place the pointing device 50 in any desired orientation by rotating the arm 22 about the elevation pivot 30, by rotating the support assembly 28 about the pitch pivot 32, and rotating the attachment plate 44 about the roll pivot 34. These three pivots may be rotated individually or in combination, providing the user with numerous possible orientations for the pointing device 50. Each of the pivots may be set at any user-selected angle along their entire range of rotation and each are sufficiently stiff to maintain the user-set orientation while supporting the pointing device 50. Alternatively, the pivots may have preset stops built in to permit the user to set the angle at one of a plurality of finite pivot angles along the range of rotation, an example of which is shown in U.S. Patent Application No. 67/731,626 and in the Ballpoint Mouse product now commercially available.

A selected degree of pitch may be maintained, because the elevation pivot 30 and pitch pivot 32 are parallel. For example, the user may want the attachment plate 44 to be generally parallel to the base member 20, as illustrated in Figure 5, regardless of the elevation of the arm 22. This may be accomplished by rotating the support assembly 28 in a clockwise direction about the pitch pivot 32 to the extent necessary to compensate for any counterclockwise rotation of the arm 22 about the elevation pivot 30. As a result, the arm 22 may be moved from a position generally parallel to the base member 20, as illustrated in Figure 5, to a position generally perpendicular to the base member 20, as illustrated in Figure 7, while maintaining the attachment plate 44 in a position relatively parallel to the base member 20.

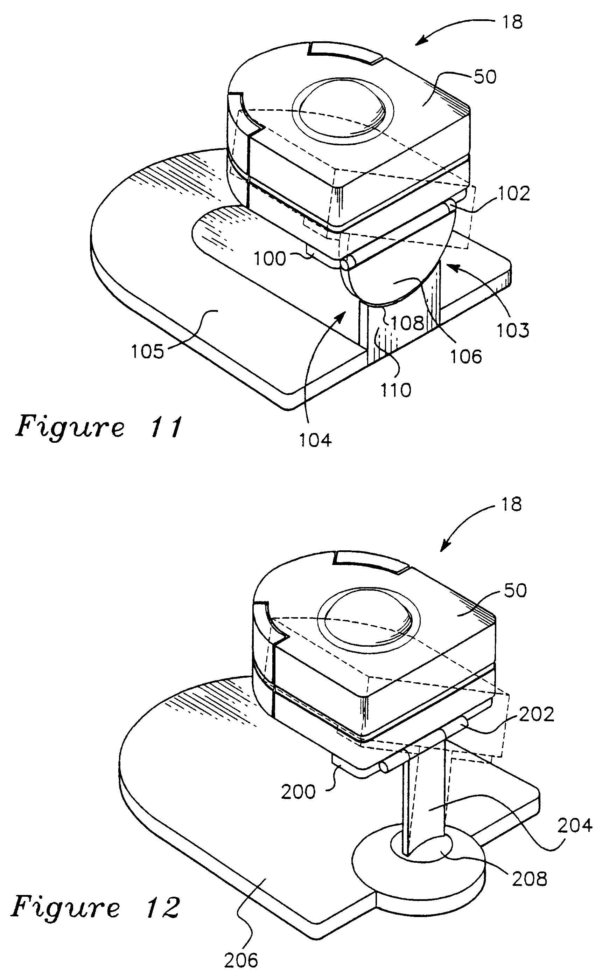

Figures 11-14 illustrate alternative embodiments of an adjustable stand 18 according to principles of the invention. As illustrated in Figure 11, the pointing device 50 is removably attachable to an attachment plate 100, the attachment plate 100 being pivotally coupled by a pitch pivot 102 to an arm 104. The arm 104 is coupled to the base member 105 via a roll pivot 103. The arm 104 includes an arcuate plate 106 which is free to move along the correspondingly arcuate surface 108 of a support pillar 110, to which the plate 106 is rotatably coupled. The support pillar 110 is attached to base 105. Rotation about the roll pivot 103 is illustrated in Figure 11 by the broken lines. Similar to the preferred embodiment, the user may select an orientation for the pointing device by changing the pitch angle and the roll angle, either independently or in combination.

In another alternative embodiment, as illustrated in Figure 12, the pointing device 50 is removably attachable to an attachment plate 200, the attachment plate 200 being pivotally coupled to an arm 204 by a pitch pivot 202. The arm 204 is coupled to the base member 206 by a roller ball pivot 208. The pitch pivot 202 allows the user to select the degree of the pitch angle of the pointing device 50 and the roller ball pivot 208 allows the user to select the elevation and roll angle of the pointing device 50. The user may thus position the pointing device 50 in a selected orientation, as illustrated by the broken lines.

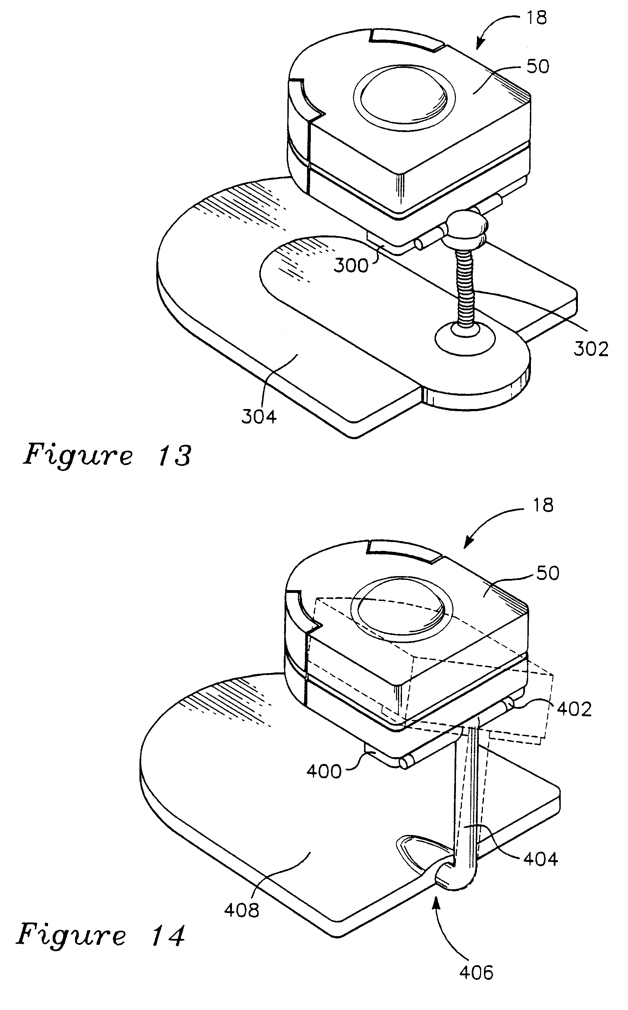

Figure 13 illustrates an alternative embodiment wherein the pointing device 50 is removably attachable to an attachment plate 300, the attachment plate 300 being coupled to a bendable column 302. The bendable column 302 is rigidly coupled to a base member 304. The bendable column 302 is made of any material that is sufficiently flexible to allow the user to bend and twist it into a selected orientation and sufficiently stiff enough to remain in the user-selected orientation while supporting the weight of the pointing device 50. A rubber material with a wire reinforcement within it may be used, similar to that now used for poseable dolls. Alternatively, the bendable column 302 could include a flexible hose, or any other suitable material known to those skilled in the art.

The alternative embodiment illustrated in Figure 14 includes a pointing device 50 which is removably attachable to an attachment plate 400. The attachment plate 400 is pivotally coupled to a tubular arm 404 via a pitch pivot 402. The tubular arm 404 is pivotally coupled at a single juncture 406 to the base member 408, creating a roll pivot and an elevation pivot. The user may, therefore, position the pointing device 50 in a selected orientation, altering the elevation, the pitch angle and the roll angle, as illustrated by the broken lines.

An adjustable stand for a pointing device has been shown and described, including numerous alternative embodiments. Given the teachings herein, an adjustable stand can be constructed by combining or incorporating one or more of the features shown herein in the alternative embodiments. For example, the pitch pivots of Figures 11-14 could be used with the embodiment of Figures 1-10 and vice versa. Similarly, the roll pivot of any one of Figures 11-14 could be used for the roll pivot of the embodiment of Figures 1-10. A stand 18 having a user-selectable elevation is preferred, but some embodiments, such as shown in Figure 11, may not have an elevation pivot.

An adjustable stand may therefore incorporate one or more features of the various embodiments or use equivalents thereof and still fall within the scope of this invention.

## Claims

1. A stand for a pointing device comprising:
a base member;
an arm having a first end and a second end, the arm being coupled to the base at the first end, the arm including means for varying the elevation of the second end of the arm; and
a support assembly coupled to the second end of the arm, the support assembly including an attachment plate that is coupled to a support bar, to which a pointing device is attachable.

2. The stand according to claim 1 wherein the attachment plate is pivotally coupled to the support bar with a roll pivot adapted to pivot the attachment plate about its roll axis.

3. The stand according to claim 1 wherein the support assembly is pivotally coupled to the second end of the arm with a pitch pivot adapted to pivot the support assembly about its pitch axis.

4. The stand according to claim 1 wherein the first end of the arm is pivotally coupled to the base member with an elevation pivot adapted to vary the elevation of the second end of the arm as the arm pivots with respect to the base member.

5. The stand according to claim 3 wherein the first end of the arm is pivotally coupled to the base member with an elevation pivot adapted to vary the elevation of the second end of the arm as the arm pivots with respect to the base member, where the pitch pivot is parallel to the elevation pivot such that the rotation of the arm about the elevation pivot may be compensated for by the rotation in the opposite direction of the support assembly about the pitch pivot, thereby maintaining a user-selected degree of pitch for the attachment plate.

6. The stand according to claim 1 wherein the attachment plate includes a mount adapted to receive a pointing device, the mount including a resilient clip that allows the pointing device to be attached to and released from the attachment plate.

7. A stand for a pointing device comprising:
a base member having a bottom surface for placement on a working surface;
an arm pivotally coupled to the base member with an elevation pivot at an upper surface of the base member, the elevation pivot rotating about a horizontal axis to vary the elevation angle of the arm;
a support bar pivotally coupled to the arm with a pitch pivot that permits the support bar to pivot about its pitch axis; and
an attachment plate pivotally coupled to the support bar with a roll pivot that permits the attachment plate to pivot about its roll axis, the attachment plate including a mount adapted to receive a pointing device.

8. A stand and pointing device assembly comprising:
a base member means for resting on a work surface;
an arm having a first end and a second end, the arm being coupled to the base at the first end, the arm including means for varying the elevation of the second end of the arm;
a support assembly means for permitting a user to select an orientation for a pointing device, the support assembly being coupled to the second end of the arm, and including an attachment plate that is coupled to a support bar, to which a pointing device is attachable; and
a pointing device means for entering commands into a computer, the pointing device being attachable to the attachment plate.

9. The stand according to claim 8 wherein the attachment plate is pivotally coupled to the support bar with a roll pivot means for permitting the attachment plate to pivot about its roll axis.

10. The stand according to claim 8 wherein the support assembly is pivotally coupled to the second end of the arm with a pitch pivot means for permitting the support assembly to pivot about its pitch axis.

11. The stand according to claim 8 wherein the first end of the arm is pivotally coupled to the base member with an elevation pivot means for varying the elevation of the second end of the arm as the arm pivots with respect to the base member.

12. The stand according to claim 10 wherein the first end of the arm is pivotally coupled to the base member with an elevation pivot means for varying the elevation of the second end of the arm as the arm pivots with respect to the base member, where the pitch pivot is parallel to the elevation pivot such that the rotation of the arm about the elevation pivot may be compensated for by the rotation in the opposite direction of the support assembly about the pitch pivot, thereby maintaining a user-selected degree of pitch for the attachment plate.

13. The stand according to claim 8 wherein the attachment plate includes a mount adapted to receive a pointing device, the mount including a resilient clip that allows the pointing device to be attached to and released from the attachment plate.

14. A stand and pointing device assembly comprising:
a pointing device;
a base member having a bottom surface for placement on a working surface;
an arm pivotally coupled to the base member with an elevation pivot at an upper surface of the base member;
a support bar pivotally coupled to the arm with a pitch pivot; and
an attachment plate pivotally coupled to the support bar with a roll pivot, the attachment plate including a mount adapted to receive the pointing device.

15. The stand according to claim 14 wherein the pitch pivot is provided with means for stopping at a preset, finite number of positions along its path of rotation to allow a user to position the pointing device in a selected pitch orientation.

16. A method of placing a pointing device at a user-selected orientation comprising:
rotating an arm about a first horizontal axis to place the pointing device at a selected elevation;
rotating a support assembly about a second horizontal axis to place the pointing device at a selected pitch; and
rotating an attachment plate about a third horizontal axis to place the pointing device at a selected roll angle.

17. A method of placing a pointing device at a user-selected orientation comprising:
rotating an arm about a first axis to place the pointing device at a selected elevation, the arm being pivotally coupled to a base member;
rotating a support assembly about a second axis to place the pointing device at a selected pitch, the support assembly being pivotally coupled to the arm; and
rotating an attachment plate about a third axis to place the pointing device at a selected roll angle, the attachment plate, to which a pointing device is attachable, being pivotally coupled to the support assembly.

18. A method of placing a pointing device at a user-selected orientation comprising:
maintaining a base member in a fixed position on a support surface; and
changing the elevation of a support assembly while maintaining the base member in the fixed position, the support assembly being coupled to the base member.
